# EUROPEAN PATENT SPECIFICATION

(11) **EP 3 138 999 B1**
(45) Date of publication and mention of the grant of the patent: **09.11.2022**
(21) Application number: 16183857.8
(22) Date of filing: 11.08.2016
(51) Int. Cl.: F01D 5/22

(54) **DAMPER PIN FOR DAMPING ADJACENT TURBINE BLADES AND TURBINE ENGINE**
DÄMPFENDER STIFT ZUM DÄMPFEN VON BENACHBARTEN TURBINENSCHAUFELN UND TURBINENKRAFTWERK
GOUPILLE AMORTISSANTE POUR AMORTIR DES AUBES DE TURBINE ADJACENTES ET MOTEUR À TURBINE

(30) Priority: 03.09.2015 US 201514844294
(43) Date of publication of application: 08.03.2017
(73) Proprietor: General Electric Company, Schenectady, NY 12345 (US)
(72) Inventor: KAREFF, Spencer Aaron, Greenville, SC South Carolina 29615-4614 (US); PURAM, Gayathri, 560066 Bangalore, Karnataka (IN); BOYER, Bradley Taylor, Greenville, SC South Carolina 29615 (US); PENNY, Christopher Michael, Greenville, SC South Carolina 29615-4614 (US); PIERSALL, Matthew R., Greenville, SC South Carolina 29615 (US)
(74) Representative: Novagraaf Group

(56) References cited:
- EP-A1- 2 500 525
- EP-A1- 3 093 439
- EP-A2- 2 738 353
- JP-A- H07 305 602
- US-A1- 2006 110 255

## Description

The present invention generally relates to a turbomachine having multiple circumferentially aligned turbine blades. More particularly, this invention involves a damper pin having a plurality of slots for providing vibration damping between adjacent turbine blades. The invention relates to a damper pin for damping adjacent turbine blades coupled to a rotor shaft and to a turbine engine.

A turbine blade, also known as a turbine bucket or turbine rotor blade, converts energy from a flowing fluid such as hot combustion gas or steam into mechanical energy by causing a rotor shaft of a turbomachine to rotate. As the turbomachine transitions through various operating modes, the turbine blades are subjected to both mechanical and thermal stresses.

A turbine blade generally includes an airfoil that extends radially outwardly from a platform, a shank that extends radially inwardly from the platform and a dovetail or mounting portion that extends radially inwardly from the shank. The dovetail of each turbine blade is secured within a complementary slot defined in a rotor wheel or disk. The rotor wheel is coupled to the rotor shaft.

During engine operation, vibrations may be introduced into the turbine blades. For example, fluctuations in flow of the hot combustion gases or steam may cause them to vibrate. One basic design consideration for turbomachine designers is to avoid or to minimize resonance with natural frequencies of the turbine blades and the dynamic stresses produced by forced response and/or aero-elastic instabilities, thus controlling high cycle fatigue of the turbine blades. In order to improve the high cycle fatigue life of a turbine blade, vibration dampers are typically provided below and/or between the platforms to frictionally dissipate vibratory energy and reduce the corresponding amplitude of vibration during operation. The amount of vibrational energy that is removed by the vibration damper is a function of the dynamic weight of the vibration damper and the reaction loads.

Although known dampers may be largely adequate during typical operations, there is a desire to improve overall damper effectiveness. Prior attempts to accomplish damping of vibrations have included round damper pins, sheet metal flat dampers, or complex wedge shaped dampers. Often true damper performance of these types of dampers is not known until the first engine test. However, at that time, the damper pocket geometry in the turbine blades is locked in by hard tooling. US 2006/110255 A1 relates to a damper pin for active cooling and purge of bucket slash faces. EP 2500525 A1 relates to a camper pin for coupling platforms of adjacent turbine blades including a first flat longitudinal end region and a second flat longitudinal end region. JPH07305602 A relates to a cooling device for the platform of a gas turbine moving blade including a seal pin. Thus, if the damper does not perform as expected, then a potentially expensive tooling rework may be required. Accordingly, there is desire for a damping pin that provides a natural frequency tuning tool for resonant mode excitation avoidance and that enables independent mode tuning options without necessitating changes to the design of an existing turbine blade.

Various aspects and advantages of the invention are set forth below in the following description, or may be clear from the description, or may be learned through practice of the invention. One embodiment of the present invention is a damper pin according to claim 1 for damping adjacent turbine blades coupled to a rotor shaft.

Another embodiment of the present invention is a turbine engine according to claim 9.

Advantageous aspects of the invention are defined in the dependent claims.

Those of ordinary skill in the art will better appreciate the features and aspects of such embodiments, and others, upon review of the specification. In the drawings
FIG. 1 illustrates a functional diagram of an exemplary gas turbine as may incorporate at least one embodiment of the present invention;
FIG. 2 is a perspective view of an exemplary turbine blade according to at least one embodiment of the present invention;
FIG. 3 is a schematic illustration of a damper pin disposed between circumferentially adjacent turbine blades according to at least one embodiment of the present invention;
FIG. 4 is a side view of a damper pin not according to the invention and disclosed for illustration purposes only;
FIG. 5 is a top view of the damper pin as shown in FIG. 4;
FIG. 6 is a side view of a damper pin not according to the invention and disclosed for illustration purposes only;
FIG. 7 is a top view of a damper pin not according to the invention and disclosed for illustration purposes only;
FIG. 8 is a side view of the damper pin as shown in FIG. 7;
FIG. 9 is a top view of an exemplary damper pin according to one embodiment of the present invention;
FIG. 10 is a side view of the exemplary damper pin as shown in FIG. 9;
FIG. 11 is a top view of a damper pin not according to the invention and disclosed for illustration purposes only; and
FIG. 12 is a side view of the damper pin as shown in FIG. 11.

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, and the term "axially" refers to the relative direction that is substantially parallel and/or coaxially aligned to an axial centerline of a particular component.

Although an industrial or land based gas turbine is shown and described herein, the present invention as shown and described herein is not limited to a land based and/or industrial gas turbine unless otherwise specified in the claims. For example, the invention as described herein may be used in any type of turbomachine including but not limited to a steam turbine, an aircraft gas turbine or marine gas turbine.

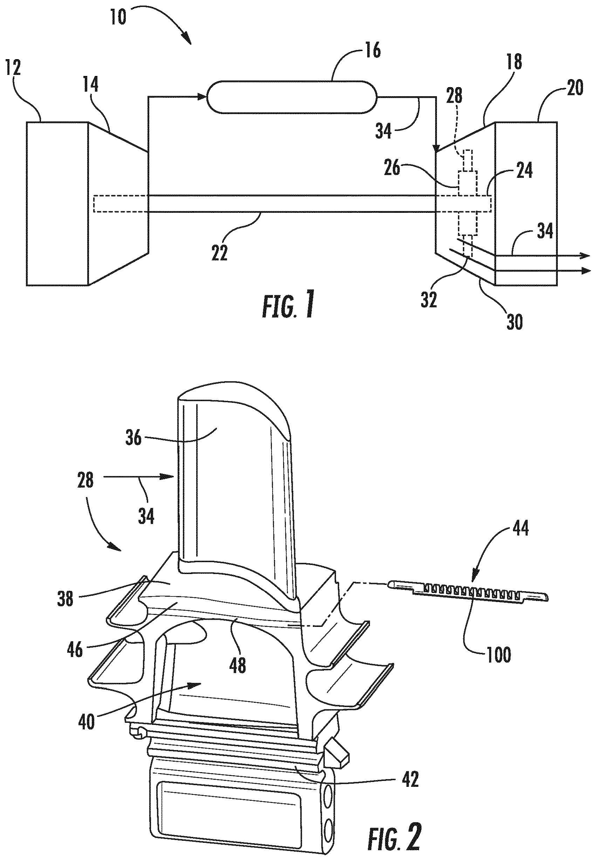

Referring now to the drawings, FIG. 1 illustrates a schematic diagram of one embodiment of a gas turbine 10. The gas turbine 10 generally includes an inlet section 12, a compressor section 14 disposed downstream of the inlet section 12, a plurality of combustors (not shown) within a combustor section 16 disposed downstream of the compressor section 14, a turbine section 18 disposed downstream of the combustor section 16 and an exhaust section 20 disposed downstream of the turbine section 18. Additionally, the gas turbine 10 may include one or more shafts 22 coupled between the compressor section 14 and the turbine section 18.

The turbine section 18 may generally include a rotor shaft 24 having a plurality of rotor disks 26 (one of which is shown) and a plurality of rotor blades 28 extending radially outwardly from and being interconnected to the rotor disk 26. Each rotor disk 26 in turn, may be coupled to a portion of the rotor shaft 24 that extends through the turbine section 18. The turbine section 18 further includes an outer casing 30 that circumferentially surrounds the rotor shaft 24 and the rotor blades 28, thereby at least partially defining a hot gas path 32 through the turbine section 18.

During operation, a working fluid such as air flows through the inlet section 12 and into the compressor section 14 where the air is progressively compressed, thus providing pressurized air to the combustors of the combustion section 16. The pressurized air is mixed with fuel and burned within each combustor to produce combustion gases 34. The combustion gases 34 flow through the hot gas path 32 from the combustor section 16 into the turbine section 18, wherein energy (kinetic and/or thermal) is transferred from the combustion gases 34 to the rotor blades 28, thus causing the rotor shaft 24 to rotate. The mechanical rotational energy may then be used to power the compressor section 14 and/or to generate electricity. The combustion gases 34 exiting the turbine section 18 may then be exhausted from the gas turbine 10 via the exhaust section 20.

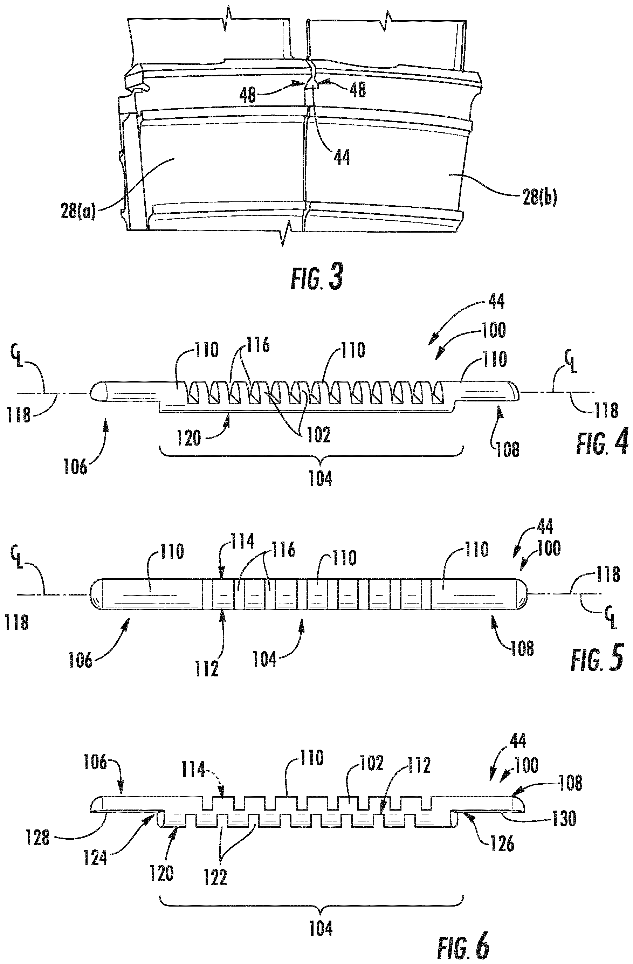

FIG. 2 illustrates a conventional turbine blade or bucket 28 including an airfoil 36, a platform 38, a shank 40 and a dovetail or mounting portion 42. FIG. 3 provides a downstream view of a pair of circumferentially adjacent turbine blades 28(a), 28(b). As shown in FIG. 2, the dovetail 42 is utilized to secure the turbine blade 28 to a periphery of the rotor disk 26 (FIG. 1), as is well understood in the art. The platform 38 defines an inward flow boundary for the combustion gases 34 flowing through the hot gas path 32 of the turbine section 18 (FIG. 1). In various embodiments of the present invention, a damper pin 44 is located along one axial edge (or slash face) 46 adjacent to (i.e., radially inward of) the turbine blade platform 38. It will be appreciated that a similar damper pin 44 is located between each adjacent pair of turbine blades 28(a), 28(b) (FIG. 3) on the rotor disk 26 (FIG. 1) as apparent from

FIG. 3. In particular embodiments, as shown in FIG. 2, the damper pin 44 is located in an elongated groove 48 (FIG. 1) that extends along the entire slash face 46 of the turbine blade 28.

The damper pin 44 serves as a vibration damper. When installed, as shown in FIG. 3, the damper pin 44 is positioned between the adjacent turbine blades 28(a), 28(b). In operation, the damper pin 44 frictionally dissipates vibratory energy and reduces corresponding amplitude of vibration. The amount of vibrational energy that is removed by the damper pin 44 is a function several factors including but not limited to the dynamic weight of the damper pin 44, the geometry of the damper pin 44 and the reaction loads between the adjacent turbine blades 28(a), 28(b).

FIG. 4 provides a side view of a disclosed damper pin 100. FIG. 5 provides a top view of the damper pin 100 as shown in FIG. 4. It is to be understood that damper pin 100 shown in FIG. 4 may be substituted for damper pin 44 as shown in FIGS. 2 and 3.

It is herein disclosed, as shown in FIG. 4, the damper pin 100 includes an elongated body 102 having a center portion 104 disposed between a first end portion 106 and a second end portion 108. As shown in FIGS. 4 and 5, the first end portion 106, center portion 104 and the second end portion 108 define a generally arcuate top portion or surface 110 of the elongated body 102. The top portion 110 of the elongated body 102 may be configured (sized and/or shaped) to contact with the groove 48 defined between the adjacent turbine blades 28(a), 28(b). As shown in FIG. 5, the elongated body 102 further includes a first side portion 112 that is laterally opposed to a second side portion 114.

As shown in FIGS. 4 and 5, the elongated body 102 defines a plurality of laterally extending slots 116. The slots 116 are axially spaced along the center portion 104 with respect to axial centerline 118. As shown in FIG. 4, at least one slot 116 of the plurality of slots 116 extends radially through the top portion 110 towards a bottom portion 120 of the elongated body 102 that is defined by the center portion 104 of the elongated body 102.

Each slot 116 extends through at least one of the first side portion 112 or the second side portion 114. As shown in FIGS. 4 and 5, each slot 116 extends through the top portion 110 and laterally through both the first side portion 112 and the second side portion 114.

FIG. 6 provides a side view of the disclosed damper pin 100. As shown in FIG. 6, the elongated body 102 may further include a plurality of slots 122 disposed along the bottom portion 120 of the elongated body 102. At least a portion of the plurality of slots 122 may extend radially through the bottom portion 110 towards the top portion 110. Each slot 122 of the plurality of slots 122 may extend through at least one of the first side portion 112 or the second side portion 114. As shown in FIG. 6, each slot 122 extends through the bottom portion 120 and laterally through both the first side portion 112 and the second side portion 114. The plurality of slots 122 defined along the bottom portion 120 may be axially offset from the plurality of slots 116 defined along the top portion 110 with respect to centerline 118.

As shown collectively in FIGS. 5 and 6, the first end portion 106 and/or the second end portion 108 of the first elongated body 102 are semi-cylindrical. As shown in FIG. 6, the first end portion 106 and the second end portion 108 may interface with the center portion 104 at shoulders 124, 126 respectively. This configuration creates substantially flat support surfaces 128, 130 (best seen in FIG. 6) that are adapted to rest on machined turbine blade platform surfaces or shoulders at opposite ends of the groove 48 formed in the turbine blade slash face 46, thereby providing support for the damper pin 100 while preventing undesirable excessive rotation during machine operation.

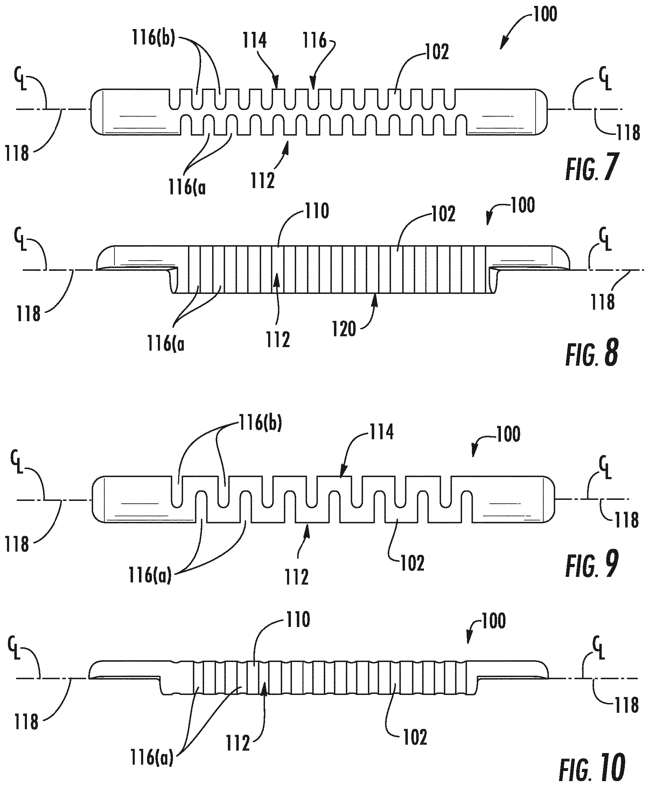

FIGS. 7, 8, 9, 10, 11 and 12 provide various views of the damper pin 100 according to various embodiments of the present invention. For example, in one embodiment, as shown collectively in FIGS. 7-10, the plurality of slots 116 comprises a first set of slots 116(a) defined along the first side portion 112 of the elongated body 102 and a second set of slots 116(b) defined along the second side portion 114 of the elongated body 102. In particular embodiments, as shown in FIGS 7-10, at least one slot 116 of the first set of slots 116(a) and at least one slot 116 of the second set of slots 116(b) extend generally radially through the top portion 110 and the bottom portion 120 of the elongated body 102. As shown in FIGS. 7 and 9, the first set of slots 116(a) may be axially offset from the second set of slots 116(b) with respect to centerline 118.

As illustrated in FIG. 7, the first set of slots 116(a) may extend through the first side portion 112 and terminate at a point or position that is short of the centerline 118. In addition or in the alternative, the second set of slots 116(b) may extend through the second side portion 114 and terminate at a point or position that is short of the centerline 118. In the embodiment of the invention, as illustrated in FIG. 9, the first set of slots 116(a) extends through the first side portion 112 and terminates at a point or position that is past the centerline 118. In addition, the second set of slots 116(b) extends through the second side portion 114 and terminates at a point or position that is past the centerline 118.

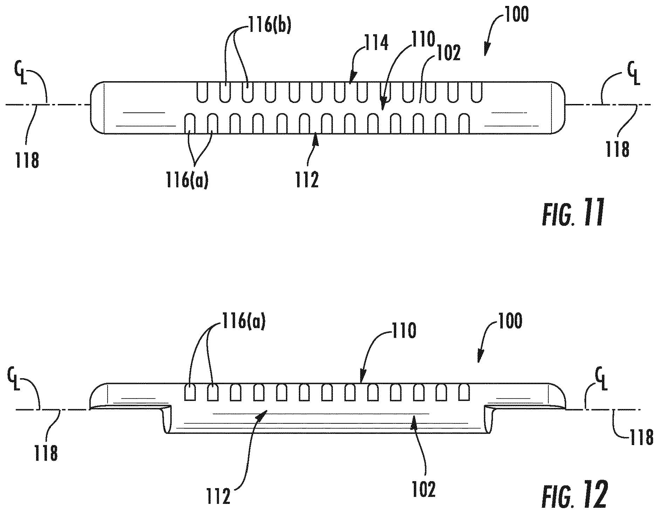

As shown in FIGS. 11 and 12, the first set of slots 116(a) may be defined along the first side portion 112 and the second set of slots 116(b) may be defined along the second side portion 114 of the elongated body 102. As shown in FIGS. 11 and 12 collectively, the first set of slots 116(a) extends through the top portion 110 and the first side portion 112 but do not extend through the bottom portion 120 of the elongated body 102. In addition, the first set of slots 116(a) terminate at a point or position that is short of or adjacent to centerline 118. In addition or in the alternative, the second set of slots 116(b) extends through the top portion 110 and the second side portion 114 but do not extend through the bottom portion 120 of the elongated body 102. In addition, the second set of slots 116(b) terminate at a point or position that is short of or adjacent to centerline 118. As shown in FIG. 11, the first set of slots 116(a) may be axially offset from the second set of slots 116(b) with respect to centerline 118.

The various embodiments of the damper pin illustrated and described herein, provide various technical benefits over existing damper pins known in the art. For example, the slots 116 defined in the various embodiments of the damper pin 100 interrupt the pin which allows for modification to or tuning of the stiffness of the damper pin, thereby impacting the stiffness imparted on the adjacent turbine blades and changing or tuning the natural frequency of specific modes of the adjacent turbine blades. The shape, pattern, location, and form of the interruption can be used to change the magnitude, direction, and method of stiffness impact thereby changing the specific natural frequency of the turbine blades coupled to the rotor shaft.

This written description uses examples to disclose the invention and also to enable any person skilled in the art to practice the invention, including making and using any devices or systems and performing any incorporated methods. The scope of the invention is defined by the claims.

## Claims

1. A damper pin (100) for damping adjacent turbine blades (28) coupled to a rotor shaft (24), the damper pin (100) comprising:
an elongated body (102) having a center portion (104) disposed between a first end portion (106) and a second end portion (108), the first end portion, center portion and second end portion defining a generally arcuate top portion (110) of the elongated body (102) configured to contact with a groove (48) defined between the adjacent turbine blades (28), wherein the elongated body (102) includes a first side portion (112) laterally opposed to a second side portion (114);
wherein the elongated body (102) defines a plurality of laterally extending slots (116) axially spaced along the center portion (104), the plurality of slots (116) comprising a first set of slots (116a) and a second set of slots (116b), each slot of the first set of slots extending from the first side portion (112), through a centerline of the elongated body and into the second side portion (114), each slot of the first set of slots terminating at a point or position that is past the centerline (118), each slot of the second set of slots extending from the second side portion (114) through the centerline, and into the first side portion (112), each slot of the second set of slots (116b) terminating at a point or position that is past the centerline (118), **characterized in that** each slot of the first set of slots does not extend entirely through the second side portion, and that each slot of the second set of slots does not extend entirely through the first side portion.

2. The damper pin (100) as in claim 1, wherein each slot of the first set of slots (46) is axially offset from an axially adjacent slot of the second set of slots.

3. The damper pin (100) as in any preceding claim, wherein at least one slot (116) of the plurality of slots extends continuously through the top portion and through a bottom portion of the elongated body along one of the first side portion or the second side portion of the elongated body.

4. The damper pin (100) as in any preceding claim, wherein at least one slot (116) of the plurality of slots extends radially through the top portion towards a bottom portion of the elongated body.

5. The damper pin (100) as in any preceding claim, wherein the first end portion (106) is semi-cylindrical.

6. The damper pin (100) as in claim 5, wherein the first end portion (106) further defines a flat surface.

7. The damper pin (100) as in any preceding claim, wherein the second end portion (108) is semi-cylindrical.

8. The damper pin (100) as in claim 7, wherein the second end portion further defines a flat surface.

9. A turbine engine (10), comprising:
a rotor shaft (24) that extends axially within the turbine engine;
an adjacent pair of turbine blades (28) coupled to the rotor shaft, each turbine blade at least partially defining a groove that extends along a slash face of the corresponding turbine blade; and
a damper pin (100) as claimed in claim 1 disposed within the groove.

10. The turbine engine (10) as in claim 9, wherein each slot of the first set of slots is axially offset from an axially adjacent slot of the second set of slots.

11. The turbine engine (10) as in any of claims 9 to 10, wherein at least one slot of the plurality of slots extends continuously through the top portion and through a bottom portion of the elongated body along one of the first side portion or the second side portion of the elongated body.

## Patentansprüche

1. Dämpferstift (100) zum Dämpfen angrenzender Turbinenschaufeln (28), die mit einer Rotorwelle (24) gekoppelt sind, der Dämpferstift (100) umfassend:
einen länglichen Körper (102), der einen Mittelabschnitt (104) aufweist, der zwischen einem ersten Endabschnitt (106) und einem zweiten Endabschnitt (108) angeordnet ist, wobei der erste Endabschnitt, der Mittelabschnitt und der zweite Endabschnitt einen im Allgemeinen gebogenen oberen Abschnitt (110) des länglichen Körpers (102) definieren, der konfiguriert ist, um eine Nut (48), die zwischen den angrenzenden Turbinenschaufeln (28) definiert ist, zu berühren, wobei der längliche Körper (102) einen ersten Seitenabschnitt (112) beinhaltet, der seitlich einem zweiten Seitenabschnitt (114) gegenüber liegt;
wobei der längliche Körper (102) eine Vielzahl von sich seitlich erstreckenden Schlitzen (116) definiert, die axial entlang des Mittelabschnitts (104) beabstandet sind, die Vielzahl von Schlitzen (116) umfassend einen ersten Satz von Schlitzen (116a) und einen zweiten Satz von Schlitzen (116b), wobei jeder Schlitz des ersten Satzes von Schlitzen sich von dem ersten Seitenabschnitt (112) durch eine Mittellinie des länglichen Körpers und in den zweiten Seitenabschnitt (114) hinein erstreckt, wobei jeder Schlitz des ersten Satzes von Schlitzen an einem Punkt oder einer Position endet, der/die hinter der Mittellinie (118) liegt, wobei jeder Schlitz des zweiten Satzes von Schlitzen sich von dem zweiten Seitenabschnitt (114) durch die Mittellinie und in den ersten Seitenabschnitt (112) hinein erstreckt, jeder Schlitz des zweiten Satzes von Schlitzen (116b), der an einer Stelle oder einer Position endet, der/die hinter der Mittellinie (118) liegt, **dadurch gekennzeichnet, dass** sich jeder Schlitz des ersten Satzes von Schlitzen nicht vollständig durch den zweiten Seitenabschnitt erstreckt, und dass sich jeder Schlitz des zweiten Satzes von Schlitzen nicht vollständig durch den ersten Seitenabschnitt erstreckt.

2. Dämpferstift (100) nach Anspruch 1, wobei jeder Schlitz des ersten Satzes von Schlitzen (46) von einem axial angrenzenden Schlitz des zweiten Satzes von Schlitzen axial versetzt ist.

3. Dämpferstift (100) nach einem der vorstehenden Ansprüche, wobei sich mindestens ein Schlitz (116) der Vielzahl von Schlitzen kontinuierlich durch den oberen Abschnitt und durch einen unteren Abschnitt des länglichen Körpers entlang eines von dem ersten Seitenabschnitt oder dem zweiten Seitenabschnitt des länglichen Körpers erstreckt.

4. Dämpferstift (100) nach einem der vorstehenden Ansprüche, wobei sich mindestens ein Schlitz (116) der Vielzahl von Schlitzen radial durch den oberen Abschnitt in Richtung eines unteren Abschnitts des länglichen Körpers erstreckt.

5. Dämpferstift (100) nach einem der vorstehenden Ansprüche, wobei der erste Endabschnitt (106) halbzylindrisch ist.

6. Dämpferstift (100) nach Anspruch 5, wobei der erste Endabschnitt (106) ferner eine flache Oberfläche definiert.

7. Dämpferstift (100) nach einem der vorstehenden Ansprüche, wobei der zweite Endabschnitt (108) halbzylindrisch ist.

8. Dämpferstift (100) nach Anspruch 7, wobei der zweite Endabschnitt ferner eine flache Oberfläche definiert.

9. Turbinentriebwerk (10), umfassend:
eine Rotorwelle (24), die sich innerhalb des Turbinentriebwerks axial erstreckt;
ein angrenzendes Paar von Turbinenschaufeln (28), die mit der Rotorwelle gekoppelt sind, wobei jede Turbinenschaufel mindestens teilweise eine Nut definiert, die sich entlang einer Schlitzfläche der entsprechenden Turbinenschaufel erstreckt; und
einen Dämpferstift (100) nach Anspruch 1, der innerhalb der Nut angeordnet ist.

10. Turbinentriebwerk (10) nach Anspruch 9, wobei jeder Schlitz des ersten Satzes von Schlitzen von einem axial angrenzenden Schlitz des zweiten Satzes von Schlitzen axial versetzt ist.

11. Turbinentriebwerk (10) nach einem der Ansprüche 9 bis 10, wobei sich mindestens ein Schlitz der Vielzahl von Schlitzen kontinuierlich durch den oberen Abschnitt und durch einen unteren Abschnitt des länglichen Körpers entlang eines von dem ersten Seitenabschnitt oder dem zweiten Seitenabschnitt des länglichen Körpers erstreckt.

## Revendications

1. Goupille d'amortisseur (100) pour amortir des aubes de turbine (28) adjacentes couplées à un arbre de rotor (24), la goupille d'amortisseur (100) comprenant :
un corps allongé (102) ayant une partie centrale (104) disposée entre une première partie d'extrémité (106) et une seconde partie d'extrémité (108), la première partie d'extrémité, la partie centrale et la seconde partie d'extrémité définissant une partie supérieure généralement arquée (110) du corps allongé (102) configurée pour venir en contact avec une rainure (48) définie entre les aubes de turbine (28) adjacentes, dans laquelle le corps allongé (102) inclut une première partie latérale (112) latéralement opposée à une seconde partie latérale (114) ;
dans laquelle le corps allongé (102) définit une pluralité de fentes s'étendant latéralement (116) espacées axialement le long de la partie centrale (104), la pluralité de fentes (116) comprenant un premier ensemble de fentes (116a) et un second ensemble de fentes (116b), chaque fente du premier ensemble de fentes s'étendant de la première partie latérale (112), à travers une ligne centrale du corps allongé et dans la seconde partie latérale (114), chaque fente du premier ensemble de fentes se terminant au niveau d'un point ou d'une position qui est au-delà de la ligne centrale (118), chaque fente du second ensemble de fentes s'étendant de la seconde partie latérale (114) à travers la ligne centrale, et dans la première partie latérale (112), chaque fente du second ensemble de fentes (116b) se terminant au niveau d'un point ou d'une position qui est au-delà de la ligne centrale (118), **caractérisée en ce que** chaque fente du premier ensemble de fentes ne s'étend pas entièrement à travers la seconde partie latérale, et **en ce que** chaque fente du second ensemble de fentes ne s'étend pas entièrement à travers la première partie latérale.

2. Goupille d'amortisseur (100) selon la revendication 1, dans laquelle chaque fente du premier ensemble de fentes (46) est décalée axialement d'une fente axialement adjacente du second ensemble de fentes.

3. Goupille d'amortisseur (100) selon une quelconque revendication précédente, dans laquelle au moins une fente (116) de la pluralité de fentes s'étend de manière continue à travers la partie supérieure et à travers une partie inférieure du corps allongé le long d'une de la première partie latérale ou de la seconde partie latérale du corps allongé.

4. Goupille d'amortisseur (100) selon une quelconque revendication précédente, dans laquelle au moins une fente (116) de la pluralité de fentes s'étend radialement à travers la partie supérieure vers une partie inférieure du corps allongé.

5. Goupille d'amortisseur (100) selon une quelconque revendication précédente, dans laquelle la première partie d'extrémité (106) est semi-cylindrique.

6. Goupille d'amortisseur (100) selon la revendication 5, dans laquelle la première partie d'extrémité (106) définit en outre une surface plate.

7. Goupille d'amortisseur (100) selon une quelconque revendication précédente, dans laquelle la seconde partie d'extrémité (108) est semi-cylindrique.

8. Goupille d'amortisseur (100) selon la revendication 7, dans laquelle la seconde partie d'extrémité définit en outre une surface plate.

9. Moteur à turbine (10), comprenant :
un arbre de rotor (24) qui s'étend axialement au sein du moteur à turbine ;
une paire adjacente d'aubes de turbine (28) couplées à l'arbre de rotor, chaque aube de turbine définissant au moins partiellement une rainure qui s'étend le long d'une face oblique de l'aube de turbine correspondante ; et
une goupille d'amortisseur (100) selon la revendication 1 disposée au sein de la rainure.

10. Moteur à turbine (10) selon la revendication 9, dans lequel chaque fente du premier ensemble de fentes est décalée axialement d'une fente axialement adjacente du second ensemble de fentes.

11. Moteur à turbine (10) selon l'une quelconque des revendications 9 à 10, dans lequel au moins une fente de la pluralité de fentes s'étend de manière continue à travers la partie supérieure et à travers une partie inférieure du corps allongé le long d'une de la première partie latérale ou de la seconde partie latérale du corps allongé.
